# EUROPÄISCHE PATENTSCHRIFT

(11) **EP 1 405 540 B1**
(45) Veröffentlichungstag und Bekanntmachung des Hinweises auf die Patenterteilung: **01.07.2009**
(21) Anmeldenummer: 01953886.7
(22) Anmeldetag: 10.07.2001
(51) Int. Cl.: H04W 36/26, H04L 29/06

(54) **VERFAHREN ZUM DURCHFÜHREN EINES QOS-ORIENTIERTEN HANDOFFS ZWISCHEN EINEM ERSTEN UND EINEM ZWEITEN IP-BASIERTEN, INSBESONDERE MOBILEN IPV6-BASIERTEN KOMMUNIKATIONSPFAD ZWISCHEN EINEM MOBILE NODE (MN) UND EINEM CORRESPONDENT NODE (CN)**
METHOD FOR CARRYING OUT A QOS-ORIENTED HANDOFF BETWEEN A FIRST AND A SECOND IP-BASED, ESPECIALLY MOBILE IPV6-BASED, COMMUNICATION PATH, BETWEEN A MOBILE NODE (MN) AND A CORRESPONDENT NODE (CN)
PROCEDE DE REALISATION D'UN TRANSFERT ORIENTE QOS ENTRE UN PREMIER ET UN SECOND CHEMIN DE TRANSMISSION IP EN PARTICULIER IPV6 MOBILE, ENTRE UN NOEUD MOBILE (MN) ET UN NOEUD CORRESPONDANT (CN)

(43) Veröffentlichungstag der Anmeldung: 07.04.2004
(73) Patentinhaber: Nokia Siemens Networks GmbH & Co. KG, 81541 München (DE)
(72) Erfinder: FAN, Changpeng, 10557 Berlin (DE); FESTAG, Andreas, 12047 Berlin (DE); FU, Xiaoming, 37075 Göttingen (DE); KAPPLER, Cornelia, 10587 Berlin (DE); KARL, Holger, 10555 Berlin (DE); SCHRAMM, Mirko, 13187 Berlin (DE); SCHÄFER, Günter, 10551 Berlin (DE)
(86) Internationale Anmeldenummer: PCT/DE2001/002547
(87) Internationale Veröffentlichungsnummer: WO 2003/009624

(56) Entgegenhaltungen:
- WO-A-00/54475
- H. CHASKAR ET AL.: "A Framework for QoS Support in Mobile IPv6 draft-chaskar-mobileip-qos-01.txt" IETF MOBILE IP WORKING GROUP, INTERNET-DRAFT, [Online] März 2001 (2001-03), XP002187129 Gefunden im Internet: <URL:http://137.132.153.41/QoS/QoS%20Metho ds/draft-chaskar-mobileip-qos-01.txt> [gefunden am 2002-01-11] in der Anmeldung erwähnt
- SOLIMAN H ET AL: "HIERARCHICAL MIPV6 MOBILITY MANAGEMENT " INTERNET DRAFT, XX, XX, Februar 2001 (2001-02), Seiten 1-15, XP002901801
- CHIRUVOLU G ET AL: "MOBILITY AND QOS SUPPORT FOR IPV6-BASED REAL-TIME WIRELESS INTERNETTRAFFIC" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, Bd. 1, 6. Juni 1999 (1999-06-06), Seiten 334-338, XP000897186 ISBN: 0-7803-5285-8
- JAIN R ET AL: "Mobile Internet access and QoS guarantees using mobile IP and RSVP with location registers" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA,IEEE, US, 7. Juni 1998 (1998-06-07), Seiten 1690-1695, XP010284628 ISBN: 0-7803-4788-9

## Beschreibung

Die vorliegende Erfindung betrifft ein Verfahren zum Durchführen eines QoS-orientierten Handoffs zwischen einem ersten und einem zweiten IP-basierten, insbesondere Mobilen IPv6-basierten Kommunikationspfad zwischen einem mobilen Knoten, einem sogenannten Mobile Node (MN) und einem Korrespondenzknoten, einem sogenannten Correspondent Node (CN). Mit dem Aufkommen verschiedenster Zugangstechnologien zu IPv6-basierten Netzwerken, werden diese Netzwerke immer stärker gezwungen sein, auch in mobilen Netzsystemen eine bestimmte Servicequalität bzw. eine bestimmte Dienstgütequalität (Quality of Service, QoS) zu gewährleisten. Mobile IPv6 stellt ein korrektes Weiterleiten (Routen) von Datenpacketen zu einem Mobile Node (MN) sicher, wenn der Mobile Node seinen Zugangspunkt (point of attachment) zu dem IPv6-basierten Netzwerk ändert. Dies ist beispielsweise erläutert in "D. Johnson and C. Perkins, Mobility Support in IPv6, Internet Draft, draft-ietf-mobileip-ipv6-13. txt, work-in-progress, Nov. 2000". Ferner ist es aber auch nötig bei einem Wechsel des Zugangspunktes durch den Mobile Node, entsprechend der zu transportierenden Datenpacketen für eine ausreichende Servicequalität (QoS) zu sorgen, so dass auch QoS-sensitive IP Dienste mittels Mobile IPv6 unterstützt werden können.

In der Schrift von Hesham Soliman et al. "Hierarchical MIPv6 mobility management", Internet Draft, draft-ietf-mobileip-hmipv6-02.txt, Feb. 2001 werden Erweiterungen für MIPv6 und Nachbar Entdeckung vorgeschlagen, um ein hierarchisches MIPv6 Mobilitäts-Management zu ermöglichen.

In einer Schrift von H. Chaskar und R.Koodli"Framework for QoS Support in Mobile IPv6", Internet Draft, draft-chaskarmobileeip-qos-01, work-in-progress, Mar. 2001 wird bereits eine auf IPv6 basierende Option, genannt "QoS Object Option" eingeführt. Dieses QoS Object enthält Information über die Servicequalitätsanforderungen, die der Kommunikationspfad zwischen dem Mobile Node und einem entsprechenden Correspondent Node zu erfüllen hat, um einen zufriedenstellenden Service zu gewährleisten. Ein derartiges QoS Object ist eingebunden als sogenannte "hop-by-hop" Option in IPv6 Datenpackete, die zusätzlich sogenannte Binding Update (BU) bzw. Binding Acknowledgement (BA) Header-Optionen enthalten können (kurz Binding Update Nachricht bzw. Binding Acknowledgement Nachricht genannt). Eine Binding Update Nachricht wird beispielsweise von einem Mobile Node zu einem entsprechenden Netzknoten, beispielsweise zu einem Correspondent Node gesendet, um diesen über eine neue IP Adresse des Mobile Node zu informieren, falls ersterer seinen Standort und somit eventuell seine IP- Adresse geändert hat. Eine Binding Acknowledgement Nachricht (BA-Nachricht) ist quasi die Antwort auf die Binding Update Nachricht (BU-Nachricht) und enthält meist die Information, dass die neue IP-Adresse durch den Correspondent Node anerkannt wurde. Dieses Anerkennen einer neuen IP-Adresse und daraufhin das Benutzen dieser neuen Adresse, was sich im Allgemeinen im Weiterleiten von Paketen entlang einer anderen Route bzw. eines anderen Pfades auswirkt, wird im Rahmen der vorliegenden Erfindung als Handoff bezeichnet. In konventionellem Mobile IPv6 durchläuft eine Binding Update Nachricht den gesamten Weg vom Mobile Node zu dem entsprechenden Correspondent Node. Dies ist im Allgemeinen aber nicht sinnvoll, da die überwiegende Mehrzahl der Handoffs lokal sind, d.h. der Mobile Node wechselt nur von einer Basisstation zu einer benachbarten. Die Konsequenz der Lokalität ist, dass sich die alte und neue Route bzw. der alte und neue Pfad, d.h. vor und nach dem Handoff, nur geringfügig unterscheiden und zwar erst in der Nähe des Mobile Nodes divergieren. Auf dieser Überlegung gründet sich das Konzept der "hierarchischen Registrierung". Demzufolge wird die BU-Nachricht nicht jeweils bis zum Correspondent Node (CN) geschickt, sondern es werden im Netz Zwischeninstanzen, sogenannte Mobility Anchor Points (MAP) eingerichtet, die ebenfalls in der Lage sind, einen Handoff durchzuführen. Die Daten fliessen dann vom CN über den MAP zum MN und umgekehrt. Eine BU-Nachricht muss dann nur noch zum MAP geschickt werden und nicht mehr zum CN selbst, sofern der MAP in der Lage ist, sowohl die alte als auch die neue IP-Adresse zu bedienen. Falls er dies nicht ist, muss die BU-Nachricht in Richtung CN weitergereicht werden und ein neuer MAP bestimmt werden. Um die Häufigkeit einer solchen Kommunikation mit einem möglicherweise weit entfernten MAP zu reduzieren, können weitere Hierarchien von MAPs eingeführt werden, die jeweils auf dem gleichen Grundprinzip beruhen, d.h. die Daten werden dann vom Mobile Node sukzessive über in der Hierarchie aufeinanderfolgende MAPs zum CN geleitet und entsprechend umgekehrt. In diesem Sinne wird von einer hierarchischen Registrierung gesprochen, da Signalisierungsnachrichten in einer solchen Hierarchie von MAPs nur so lange weitergereicht werden müssen bis ein MAP gefunden ist, der sowohl alte als auch neue IP-Adresse des MN abdeckt. Im Grenzfall muss auch hier der CN kontaktiert werden.

Chaskars Konzept des QoS Objects erlaubt insbesondere bei Hierarchischer Registrierung einen eleganten Weg, Servicequalitätsanforderungen zu behandeln. In einem solchen Fall läuft eine Binding Update Nachricht nur bis zu dem Netzknoten, wo der alte und der neue Kommunikationspfad voneinander abweichen. Nur bis zu diesem Netzknoten können sich Änderungen bezüglich der Servicequalität, d.h. der zur Verfügung stehenden QoS gegenüber dem alten Kommunikationspfad ergeben. Da die meisten sogenannten Handoffs, d.h. die meisten Standortwechsel eines Mobile Nodes verbunden mit einer Änderung seiner IP-Adresse lokal sind, ist dies die effizienteste Vorgehensweise. Von diesem Netzknoten kommt dann auch gegebenenfalls die entsprechende Binding Acknowledgement Nachricht. Wenn nun ein von Chaskar eingeführtes QoS Object als sogenannte hop-by-hop Option in diese Nachrichten eingebunden ist, so bedeutet das, dass die entsprechende Binding Update Nachricht beim Passieren mehrerer Netzknoten auf dem Weg vom Mobile Node durch das Netzsystem bis zu dem Netzknoten, bei dem der alte und der neue Kommunikationspfad zusammenlaufen, in den einzelnen Netzknoten, die mit QoS behaftet sind bzw. für die Bereitstellung der entsprechenden QoS Ressourcen verantwortlich sind, die Bereitstellung erforderlicher Ressourcen auslöst. Insbesondere wird jedoch durch Chaskar nicht spezifiziert, was im Falle nicht hinreichender Ressourcen zu geschehen hat.

Eine Aufgabe der vorliegenden Erfindung war es nun, ein Verfahren bereitzustellen, mit dessen Hilfe es ermöglicht wird, schnellstmöglich zu erkennen, ob der gewählte Kommunikationspfad zu einem Correspondent Node den Servicequalitätsanforderungen gerecht wird oder ob ein alternativer Kommunikationspfad zu dem entsprechenden Correspondent Node gesucht werden muss. Ein Handoff zwischen einem alten Kommunikationspfad und einem neuen Kommunikationspfad soll dabei nur dann stattfinden, wenn entlang des neuen Kommunikationspfades die Servicequalitätsanforderungen erfüllbar und reservierbar sind, wobei die Möglichkeit einer best-effort Qualitätsanforderung ausdrücklich eingeschlossen ist.

Gelöst wird diese Aufgabe durch ein Verfahren gemäß Anspruch 1 sowie durch eine Zwischeninstanz gemäß Anspruch 6. Vorteilhafte Ausführungsformen des erfindungsgemäßen Verfahrens sind in den entsprechenden Unteransprüchen aufgeführt.

Gemäß Anspruch 1 wird ein Verfahren zum Durchführen eines QoS-orientierten Handoffs zwischen einem ersten und einem zweiten IP-basierten, insbesondere Mobile IPv6- basierten Kommunikationspfad zwischen einem Mobile Node (MN) und einem Correspondent Node (CN) bereitgestellt, wobei der zweite Kommunikationspfad zu einer Anzahl von für den Mobile Node zugänglichen Kommunikationspfaden mit einer oder mehreren Zwischeninstanzen gehört und wobei das Verfahren mindestens die folgenden Schritte aufweist:
a. Wählen eines Kommunikationspfades aus der Anzahl von für den Mobile Node zugänglichen Kommunikationspfaden als zweiten Kommunikationspfad,
b. Generieren einer Nachricht (BU) durch den Mobile Node, die mindestens eine dem Mobile Node aufgrund des gewählten Kommunikationspfades zugeordnete IP-Adresse und Mindest-Servicequalitätsanforderungen (QoS) bezüglich des gewählten Kommunikationspfades enthält,
c. Kontrollieren und gegebenenfalls Sichern der Erfüllbarkeit mindestens der Mindest-Servicequalitätsanforderungen durch die einzelnen, von der Nachricht nacheinander zu passierenden Zwischeninstanzen auf dem gewählten Kommunikationspfad und/oder durch den Correspondent Node,
wobei die Nachricht Mindest-Servicequalitätsanforderungen an eine Kommunikation vom Mobile Node zum Correspondent Node und/oder umgekehrt enthält, und
wobei automatisch ein Handoff durchgeführt wird zwischen dem ersten und dem als zweiten gewählten Kommunikationspfad, wenn mindestens die Mindest- Servicequalitätsanforderungen erfüllt sind oder
die Nachricht gestoppt wird und eine Meldung in einer Zwischeninstanz und/oder im Correspondent Node generiert und an den Mobile Node geschickt wird, wenn die Erfüllbarkeit mindestens der Mindest-Servicequalitätsanforderungen nicht gegeben ist.

Die Nachricht in Schritt b. muss dabei nicht im Mobile Node, aber durch ihn generiert werden. D.h. der Mobile Node initiiert zumindest die Erstellung der Nachricht. Beispielsweise kann der Mobile Node eine Basisstation oder deren Controller beauftragen, die BU nacheinander die entlang des gewählten Kommunikationspfades sich befindenden Zwischeninstanzen passieren zu lassen. Sowohl dem ersten als auch dem als zweiten gewählten Kommunikationspfad ist jeweils eine Basisstation zugeordnet. Es können beispielsweise die folgenden Fälle auftreten:

Es kann wünschenswert sein, Ressourcen der Luftschnittstelle zu sparen, d.h. auf der Verbindung zwischen Mobile Node und Basisstation. Deshalb schickt der Mobile Node der Basisstation des als zweiten gewählten Kommunikationspfades eine BU ohne QoS Object, und weist sie an, die Mindest-Servicequalitätsanforderung von der Basisstation des ersten Kommunikationspfad zu beziehen.

In einem anderen Fall hat der Mobile Node noch keine Verbindung zur Basisstation des als zweiten gewählten Kommunikationspfades, sondern kennt nur deren Identität. Deshalb weist er die Basisstation des ersten Kommunikationspfades an, die Basisstation des als zweiten gewählten Kommunikationspfades zu instruieren, eine entsprechende BU zu senden.

Im Gegensatz zu der bei Chaskar vorgeschlagenen QoS Object Option wird hier nach der Kontrolle der Erfüllbarkeit der Servicequalitätsanforderungen entweder die Binding Update Nachricht (BU) verworfen und eine Meldung generiert, die den Mobile Node darüber informiert, dass die Servicequalitätsanforderungen nicht erfüllbar sind, was im Folgenden als negative Binding Acknowledgement Nachricht (BA) bezeichnet wird, oder die Binding Update Nachricht wird weitergeleitet, wenn die Servicequalitätsanforderungen erfüllbar sind. Bei Chaskar wird nicht spezifiziert, was im Falle nicht hinreichender Ressourcen zur Erfüllung der Servicequalitätsanforderungen zu geschehen hat. Gemäß des erfindungsgemäßen Verfahrens wird der Mobile Node mittels einer negativen Binding Acknowledgement Nachricht von einem derartigen Umstand in Kenntnis gesetzt. Daraufhin wird entweder die Mindest-Servicequalitätsanforderung entsprechend der auf dem gewählten Kommunikationspfad vorhandenen Servicequalität heruntergesetzt, und das erfindungsgemäße Verfahren nochmals mit demselben als zweiten gewählten Kommunikationspfad eingeleitet, oder es wird ein alternativer Kommunikationspfad als zweiter Kommunikationspfad gewählt und dann das Verfahren wiederholt, oder das erfindungsgemäße Verfahren wird nach einer Wartezeit wiederholt. Welche dieser Möglichkeiten gewählt wird, ist implementationsabhängig, und kann beispielsiweise davon abhängen, wie lange die Verbindung mit der Basisstation des ersten Kommunikationspfades noch aufrecht erhalten werden kann.

Zudem können die Servicequalitätsanforderungen für den "upstream"-Verkehr und dem "downstream"-Verkehr zwischen dem Mobile Node und dem Correspondent Node gleichzeitig mit der Binding Update Nachricht gesendet werden. Insofern ist möglichst schnell sichergestellt bzw. feststellbar, ob der Kommunikationspfad sowohl für die Kommunikation vom Mobile Node zum Correspondent Node ("upstream"-Verkehr) als auch für die entsprechende Kommunikation vom Correspondent Node zum Mobile Node ("downstream"-Verkehr) die entsprechenden Servicequalitätsanforderungen erfüllt. Es besteht aber auch die Möglichkeit, dass die Servicequalitätsanforderungen für den "downstream"-Verkehr mit der Binding Acknowledgement Nachricht gesendet werden.

Ein Handoff wird nur dann durchgeführt, wenn entlang des neuen Kommunikationspfades alle beteiligten Zwischeninstanzen, d.h. alle Einheiten, die mit QoS Sicherung befasst sind, in der Lage sind, die erforderlichen Ressourcen für die Erfüllung der Servicequalitätsanforderungen bereitzustellen. Anderenfalls besteht der QoS-gesicherte alte Kommunikationspfad fort und wird weiter genutzt, während der Mobile Node durch die Meldung bzw. die negative Binding Acknowledgement Nachricht in der Lage ist, andere Kommunikationspfade über andere Basisstationen zu suchen und aufzubauen.

Vorzugsweise enthält die in Schritt b. generierte Nachricht einen Bereich von Servicequalitätsanforderungen, der sich von den Mindest-Servicequalitätsanforderungen bis zu den gewünschten Servicequalitätsanforderungen erstreckt. Das bedeutet, dass neben den Mindest-Servicequalitätsanforderungen, die erfüllt sein müssen, um eine entsprechende Kommunikation zwischen dem Mobile Node und dem Correspondent Node überhaupt zu ermöglichen, auch diejenigen Servicequalitätsanforderungen aufgeführt werden, die eine ausreichende bis hin zu einer optimalen Kommunikation zwischen dem Mobile Node und dem Correspondent Node realisieren würden. Als zusätzliche Option kann die Mindest-Servicequalitätsanforderung auch best-effort Service sein. Dies ist insbesondere für den Fall sinnvoll, dass ein MN, z.B. auf Grund seiner Bewegung nur Kontakt zu einer einzigen weiteren Basisstation aufnehmen kann, oder erwartet, die Verbindung mit der Basistation des ersten Kommunikationspfades bald zu verlieren.

Bei Prüfung der vorhandenen QoS Ressourcen wird dabei zunächst geprüft, ob die gewünschten Servicequalitätsanforderungen, die eine optimale Kommunikation realisieren würden, erfüllbar sind. Ist dies der Fall, so wird die Binding Update Nachricht einfach weitergeleitet. Sind die gewünschten Servicequalitätsanforderungen nicht erfüllbar, so wird geprüft, welche Servicequalitätsanforderungen gerade noch erfüllbar sind. Diese werden dann in das QoS Object eingetragen, und können gegebenenfalls die gewünschten Servicequalitätsanforderungen überschreiben. Sind zumindest die Mindest-Servicequalitätsanforderungen erfüllt, so wird die Nachricht weitergeleitet und die Erfüllbarkeit der Mindest-Servicequalitätsanforderungen oder gegebenenfalls der höheren Anforderungen im Umfang der noch verfügbaren Ressourcen durch Reservieren der entsprechenden Ressourcen sichergestellt.

In einer bevorzugten Ausführungsform des Verfahrens wird in dem Falle, dass ein Handoff durchgeführt wird, eine Meldung, die eine Aussage darüber macht, welche Servicequalitätsanforderungen erfüllbar sind, in einer Zwischeninstanz generiert und gleichzeitig oder nach dem Durchführen des Handoffs an den Mobile Node gesendet, so dass dieser darüber informiert ist, mit welcher Qualität die Kommunikation zwischen ihm und dem Correspondent Node realisiert wird. Das heisst, der Mobile Node wird durch die Binding Acknowledgement Nachricht, die ihrerseits wiederum informative, d.h. nicht zu Prüfzwecken verwendete QoS Objekte enthalten kann, von der schliesslich reservierten Servicequalität in Kenntnis gesetzt.

Bei den Zwischeninstanzen, die die Erfüllbarkeit der Servicequalitätsanforderungen prüfen, handelt es sich vorzugsweise um Netzelemente, die mit QoS Sicherung befasst sind. Dabei kann es sich beispielsweise um Mobility Anchor Points (MAP), aber auch um Router oder Basisstationen oder deren Controller, die entlang des in Frage kommenden Kommunikationspfades angeordnet sind und von der in Richtung Correspondent Node gesendeten Binding Update Nachricht passiert werden, handeln. Nicht alle diese Zwischeninstanzen sind gleichzeitig auch in der Lage, entsprechende Meldungen zu generieren, die an den Mobile Node gesandt werden sollen, um ihn darüber zu informieren, welche Servicequalitätsanforderungen erfüllbar sind und/oder dass die Mindest-Servicequalitätsanforderungen nicht erfüllbar sind. Vorzugsweise wird die Binding Update Nachricht von einer derartigen Zwischeninstanz, wie beispielsweise einem Router, der zwar die Feststellung über die Erfüllbarkeit der Servicequalitätsanforderungen treffen kann, nicht aber die Nachricht stoppen und eine entsprechende Meldung generieren und verschicken kann, mit einer entsprechenden Anmerkung weitergeleitet. Aufgrund dieser Anmerkung wird dann in einer nächstmöglichen, auf dem gewählten Kommunikationspfad befindlichen Zwischeninstanz, die selbst nicht notwendigerweise mit QoS Sicherung befasst ist, im Falle, dass auch die Mindest-Servicequalitätsanforderungen nicht erfüllbar sind, die Binding Update Nachricht gestoppt und eine entsprechende Meldung generiert und an den Mobile Node geschickt.

Bei dem von Chaskar eingeführten QoS Object handelt es sich um eine hop-by-hop Header Option, welche von jedem Knotenpunkt betrachtet werden muss. In der vorliegenden Erfindung ist es unter bestimmten Bedingungen auch möglich, sattdessen eine sogenannte destination Header Option zu wählen, die nur vom Adressaten betrachtet werden muss, beispielsweise dann, wenn alle Zwischeninstanzen MAPs sind, da passierende Packete jeweils an sie adressiert sind.

Der Vorteil der vorliegenden Erfindung gegenüber bekannten Vorgehensweisen, wie beispielsweise RSVP, ist die Tatsache, dass die Verfügbarkeit von Ressourcen entlang eines neuen Kommunikationspfades zwischen einem Mobile Node und einem Correspondent Node, im Falle, dass der Mobile Node seinen Standort und somit gegebenenfalls auch seine IP-Adresse ändert, mit minimalem Overhead kontrolliert und gegebenenfalls gesichert werden kann, da die entsprechenden Servicequalitätsanforderungen mit einer anderen Nachricht, nämlich der Binding Update Nachricht (BU) gekoppelt und gesendet wird, anstelle der Versendung mit einem separaten Protokoll. Zudem ist die Verfügbarkeit der nötigen Ressourcen dadurch sehr schnell kontrolliert und sichergestellt. Eine RSVP-gestützte Lösung würde zwei RTTs, d.h. zwei sogenannte "round trip times" benötigen gegenüber nur einer RTT; zudem ist die Zusammenarbeit von RSVP mit dem erläuterten hierarchischen Verfahren nicht gesichert. Im Vergleich mit dem Ansatz nach Chaskar ist vor allem die auf Grund des erfindungsmäßigen Verfahrens mögliche konditionierte Durchführung eines Handoffs auf die Verfügbarkeit von Ressourcen als Vorteil zu nennen sowie die entsprechende Erweiterung der BA-Nachricht. Die erfindungsgemäße Vorgehensweise läßt sich in Zusammenarbeit mit jedem QoS-Mechanismus realisieren, insbesondere mit DiffServ, Int-Serv und MPLS. Ferner wird der Mobile Node umgehend darüber informiert, wenn seinen Servicequalitätsanforderungen nicht Genüge getan werden kann. Dies geschieht erfindungsgemäß durch das Generieren einer entsprechenden Meldung in einer der entlang dem gewählten Kommunikationspfad zu passierenden Zwischeninstanz und/oder durch den Correspondent Node, die im Rahmen der vorliegenden Erfindung als eine negative Binding Acknowlegement Nachricht bezeichnet wird. Gleichzeitig wird erfindungsgemäß die Binding Update Nachricht gestoppt und verworfen, falls nicht zumindest die Mindest-Servicequalitätsanforderungen erfüllt sind. Dadurch eröffnet sich für den Mobile Node die Möglichkeit, einen alternativen Kommunikationspfad zu suchen und dort nochmals die Verfügbarkeit der vorhandenen QoS-Ressourcen zu prüfen.

Ferner betrifft die vorliegende Erfindung eine Zwischeninstanz, insbesondere ein Netzelement, auf einem IP-basierten, insbesondere IPv6-basierten Kommunikationspfad zwischen einem Mobile Node und einem Correspondent Node, wobei die Zwischeninstanz als Zwischeninstanz im Sinne des erfindungsgemäßen Verfahrens verwendbar ist. Bei diesem Netzelement kann es sich beispielsweise um einen Router, eine Basisstation, deren Controller oder einen Mobility Anchor Point handeln.

Weitere Vorteile des erfindungsgemäßen Verfahrens werden anhand der nachfolgenden Figuren erläutert. Es zeigen:
- Fig. 1: Schematische Darstellung des Verlaufs einer Ausführungsform des erfindungsgemäßen Verfahrens,
- Fig. 2: Schematische Darstellung des Verlaufs einer weiteren Ausführungsform des erfindungsgemäßen Verfahrens.

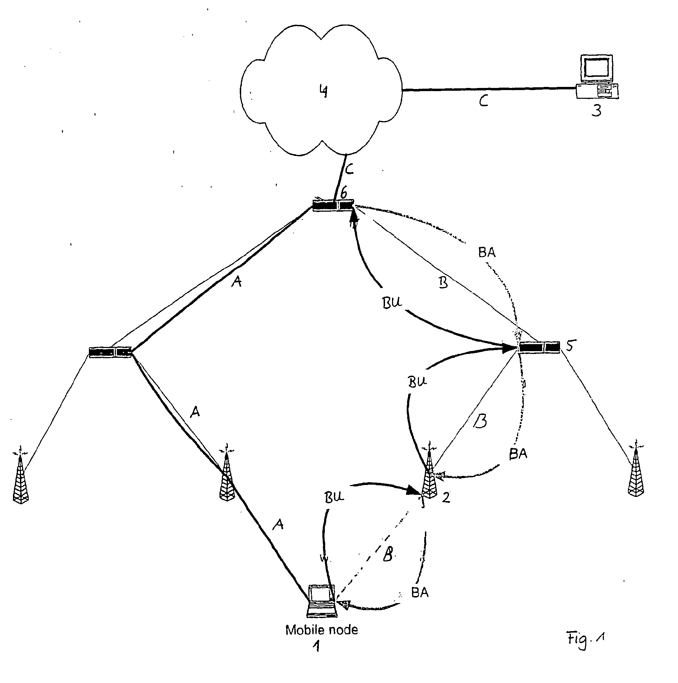

In Figur 1 ist ein Fall dargestellt, in dem der Mobile Node 1 seinen Standort im Mobilen Netz ändert und sich aufgrund dessen bei einer anderen Basisstation 2 anmelden muss. Er bekommt dabei auch eine neue IP-Adresse, an welche alle an ihn gerichteten Informationen beispielsweise von einem Correspondent Node 3 über das Internet 4 gerichtet werden müssen. Der Mobile Node 1 muss nun einen neuen Kommunikationspfad B wählen, der sich von dem alten Kommunikationspfad A dadurch unterscheidet, dass er auf dem Weg zum Correspondent Node 3 andere Knotenpunkte passiert. Mobile IPv6 gewährleistet zwar ein korrektes Weiterleiten (Routen) von Datenpacketen zu dem Mobile Node 1, wenn dieser seine IP-Adresse geändert hat, nicht aber eine ausreichende Servicequalität (QoS). Um auch gewünschten Servicequalitätsanforderungen oder zumindest Mindest-Servicequalitätsanforderungen gerecht werden zu können, generiert nun der Mobile Node 1 eine Nachricht BU, die mindestens die dem Mobile Node 1 neu zugeordnete IP-Adresse und entsprechende Servicequalitätsanforderungen (QoS) enthält. Diese Nachricht BU wird nun von dem Mobile Node 1 sukzessive entlang dem neuen Kommunikationspfad B von einem Knotenpunkt zum nächsten Knotenpunkt gereicht. Diejenigen Knotenpunkte, die weder mit Mobilität noch mit der Sicherung von Servicequalität etwas zu tun haben, leiten die Nachricht BU einfach weiter.-Diejenigen Knotenpunkte hingegen, die für eine Sicherung von Servicequalität mitverantwortlich sind oder die MAPs darstellen, werden im Rahmen der vorliegenden Erfindung als Zwischeninstanzen bezeichnet. In der Regel und vorzugsweise wird ein MAP auch für Servicequalität verantwortlich sein, aber dies ist nicht notwendig der Fall. Hierunter fallen dabei zunächst im Allgemeinen, wenn auch nicht notwendigerweise die entsprechenden Basisstationen. Der Mobile Node 1 sendet demnach die Nachricht BU zunächst an die ihm zugeordnete Basisstation 2. In der Basisstation 2 wird dann kontrolliert, ob die gewünschten Servicequalitätsanforderungen oder zumindest die Mindest-Servicequalitätsanforderungen erfüllbar sind. Nur wenn dies der Fall ist, wird die Nachricht BU an die nächste Zwischeninstanz, beispielsweise einen Mobility Anchor Point 5 weitergeleitet. Im Mobility Anchor Point 5 als weitere Zwischeninstanz auf dem Kommunikationspfad B erfolgt nun wiederum eine Kontrolle der Erfüllbarkeit der Servicequalitätsanforderungen. Der Ablauf ist hier genauso wie bereits in der Basisstation 2 beschrieben. Die letzte Zwischeninstanz 6 auf dem Kommunikationspfad B stellt derjenige Knotenpunkt dar, bei dem alter Kommunikationspfad A und neuer Kommunikationspfad B zusammenlaufen. Auf dem übereinstimmenden Teil C der Kommunikationspfade A und B wird die Servicequalität nicht mehr kontrolliert, dieser Teil C ist dahingehend vollkommen transparent. Die Erfüllbarkeit der Servicequalitätsanforderungen ist durch die bereits erfolgte Bewährung des alten Kommunikationspfades A bereits sichergestellt. Diese hierarchische Vorgehensweise ist sehr effizient und es kann erheblich Zeit eingespart werden. In der letzten Zwischeninstanz 6, hier einem weiteren Mobility Anchor Point, wird nochmals die Erfüllbarkeit der Servicequalitätsanforderungen kontrolliert und entsprechend gesichert. Diese Zwischeninstanz 6 sendet, wie hier dargestellt, eine finale Nachricht BA an den Mobile Node 1 mit der Aussage, welche Servicequalitätsanforderungen erfüllbar sind oder dass zumindest die Mindest-Servicequalitätsanforderungen erfüllbar sind. Damit einher geht der eigentliche Handoff von dem alten Kommunikationspfad A zu dem neuen Kommunikationspfad B, d.h. das Handoff ist an die Bedingung geknüpft, dass eine Verfügbarkeit ausreichender Servicequalitätsressourcen auf dem neuen Kommunikationspfad B gegeben ist. Der MAP 6 ändert den lokalen Routeneintrag bzw. den Eintrag des lokalen Kommunikationspfades und benutzt ab sofort die neue IP-Adresse des MN 1 anstelle der alten.

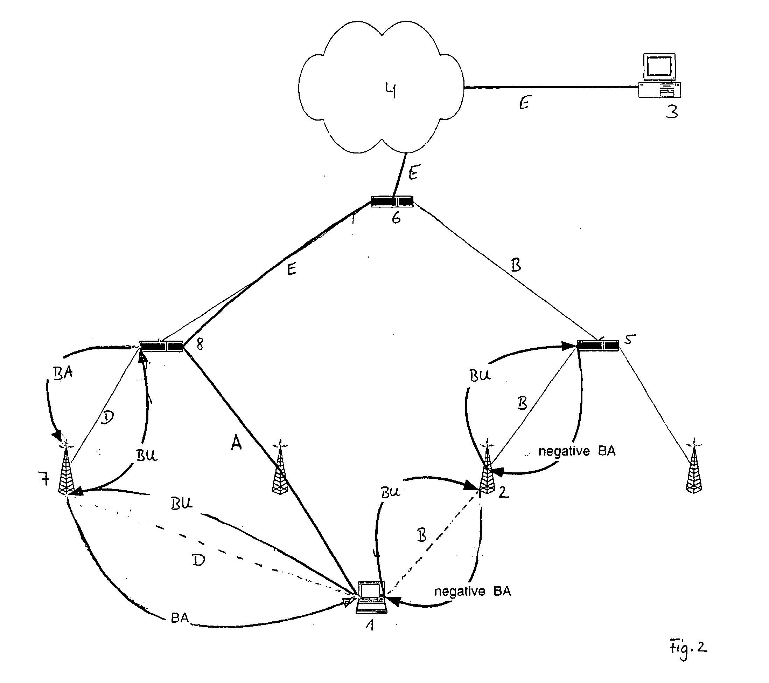

Figur 2 zeigt einen anderen Ablauf des erfindungsgemäßen Verfahrens. Auch hier hat der Mobile Node 1 eine neue IP-Adresse erhalten und versucht, einen QoS-gesicherten Kommunikationspfad für diese Adresse aufzubauen, als Alternative zu dem alten Kommunikationspfad A. Dazu sendet er wiederum zunächst eine Nachricht BU an eine für ihn in Frage kommende Basisstation 2. Diese kontrolliert die Sevicequalitätsanforderungen, sichert die entsprechenden Ressourcen und leitet die Nachricht BU weiter an die nächste Zwischeninstanz, was hier ein Mobility Anchor Point (MAP) 5 ist. Dieser stellt nun bei der Kontrolle der Servicequalitätsanforderungen fest, dass er nicht in der Lage ist, die entsprechenden Ressourcen bereitzustellen. Er sendet daraufhin eine negative Nachricht (negative BA) über die Basisstation 2 zurück an den Mobile Node 1. Es kommt nicht zu einem Handoff von dem Kommunikationspfad A zu dem neuen Kommunikationspfad B. Stattdessen versucht es der Mobile Node 1 mit einem alternativen neuen Kommunikationspfad D. Er sendet wiederum zu der entsprechenden Basisstation 7 eine Nachricht BU mit den entsprechenden Servicequalitätsanforderungen. Diese Nachricht BU wird wiederum nach gemachter Kontrolle und Sicherung der entsprechenden Ressourcen solange weitergeleitet bis entweder eine Zwischeninstanz erreicht wird, die die entsprechenden Servicequalitätsanforderungen nicht erfüllen kann oder bis eine Zwischeninstanz erreicht wird, an dem sich der neue Kommunikationspfad D und der alte Kommunikationspfad A kreuzen. Dies ist hier im vorliegenden Fall dargestellt. Die beiden Kommunikationspfade kreuzen sich bei dem Mobility Anchor Point 8. Der Restpfad E bis zum Correspondent Node 3 ist bei beiden Kommunikationspfaden A und D gleich, wodurch die Erfüllbarkeit der entsprechenden Servicequalitätsanforderungen gewährleistet ist. Insofern wird auf diesem Restpfad E hinsichtlich der Servicequalität nichts mehr kontrolliert. Wie hier dargestellt, kann der Mobility Anchor Point 8 ebenso wie die Basisstation 7 die Servicequalitätsanforderungen erfüllen. Der Mobility Anchor Point 8 sendet sodann eine Nachricht BA über die Basisstation 7 an den Mobile Node 1 mit der positiven Aussage, dass die Servicequalitätsanforderungen erfüllbar sind. Damit wird ein Handoff zwischen dem alten Kommunikationspfad A und dem neuen Kommunikationspfad D im MAP 8 durchgeführt.

## Patentansprüche

1. Verfahren zum Durchführen eines QoS-orientierten Handoffs zwischen einem ersten und einem zweiten IP-basierten, insbesondere Mobile IPv6-basierten Kommunikationspfad zwischen einem Mobile Node (1) und einem Correspondent Node (3), wobei der zweite Kommunikationspfad zu einer Anzahl von für den Mobile Node zugänglichen Kommunikationspfaden mit einer oder mehreren Zwischeninstanzen (2, 5, 6) gehört
und wobei das Verfahren mindestens die folgenden Schritte aufweist :
a. Wählen eines Kommunikationspfades aus der Anzahl von für den Mobile Node zugänglichen Kommunikationspfaden als zweiten Kommunikationspfad,
b. Generieren einer Nachricht (BU) durch den Mobile Node, die mindestens eine dem Mobile Node aufgrund des gewählten Kommunikationspfad zugeordnete IP-Adresse und Mindest-Servicequalitätsanforderungen bezüglich des gewählten Kommunikationspfades enthält,
c. Kontrollieren und gegebenenfalls Sichern der Erfüllbarkeit mindestens der Mindest-Servicequalitätsanforderungen durch die einzelnen, von der Nachricht nacheinander zu passierenden Zwischeninstanzen auf dem gewählten Kommunikationspfad und/oder durch den Correspondent Node,
wobei die Nachricht Mindest-Servicequalitätsanforderungen an eine Kommunikation vom Mobile Node zum Correspondent Node und/oder umgekehrt enthält, und
wobei automatisch zwischen dem ersten und dem als zweiten gewählten Kommunikationsweg ein Handoff durchgeführt wird, wenn mindestens die Mindest-Servicequalitätsanforderungen erfüllt sind oder
wobei die Nachricht gestoppt wird und eine Meldung in einer Zwischeninstanz und/oder im Correspondent Node generiert und an den Mobile Node geschickt wird, wenn die Erfüllbarkeit mindestens der Mindest-Servicequalitätsanforderungen nicht gegeben ist.

2. Verfahren nach Anspruch 1,
wobei die in Schritt b. generierte Nachricht einen Bereich von Servicequalitätsanforderungen enthält, die sich von Mindest-Servicequalitätsanforderungen bis zu gewünschten Servicequalitätsanforderungen erstreckt.

3. Verfahren nach Anspruch 1 oder 2,
wobei, wenn ein Handoff durchgeführt wird, eine Meldung, die eine Aussage darüber macht, welche Servicequalitätsanforderungen erfüllbar sind, in einer Zwischeninstanz und/oder dem Correspondent Node generiert und gleichzeitig oder nach dem Durchführen des Handoffs an den Mobile Node gesendet wird.

4. Verfahren nach einem der vorangehenden Ansprüche,
wobei es sich beiden Zwischeninstanzen um Netzelemente, insbesondere um Router, Basisstationen, Controller oder Mobility Anchor Points, MAP, handelt.

5. Verfahren nach einem der vorangehenden Ansprüche,
wobei durch Kombination mit hierarchical Mobile IP eine nächstgelegene, geeignete Zwischeninstanz die in Schritt b. generierte Nachricht schnellstmöglich stoppt, eine Meldung generiert und an den Mobile Node schickt, wenn die Erfüllbarkeit mindestens der Mindest-Servicequalitätsanforderungen nicht gegeben ist oder den Handoff durchführt, wenn mindestens die Mindest-Servicequalitätsanforderungen erfüllt sind.

6. Zwischeninstanz, insbesondere ein Netzelement, auf einem IP-basierten, insbesondere IPv6-basierten Kommunikationspfad zwischen einem Mobile Nod (1) und einem Correspondent Node (3),
wobei die Zwischeninstanz (2, 5, 6) eingerichtet ist mindestens die folgenden Schritte auszuführen:
a. Empfangen einer Nachricht (BU) generiert durch den Mobile Node,
die mindestens eine dem Mobile Node aufgrund eines gewähl ten Kommunikationspfades zugeordnete IP-Adresse und Mindest-Servicequalitätsanforderungen bezüglich des gewählten Kommunikationspfades enthält,
b. Kontrollieren und gegebenenfalls Sichern der Erfüllbarkeit mindestens der Mindest-Servicequalitätsanforderungen durch die von der Nachricht zu passierenden Zwischeninstanz auf dem gewählten Kommunikationspfad,
wobei die Nachricht Mindest-Servicequalitätsanforderungen an eine Kommunikation vom Mobile Node zum Correspondent Node und/oder umgekehrt enthält,
wobei die Zwischeninstanz eingerichtet ist, automatisch ein Handoff zwischen dem ersten und dem als zweiten gewählten Kommunikationsweg durchzuführen, wenn mindestens die Mindest-Servicequalitätsanforderungen erfüllt sind, oder
wobei die Zwischeninstanz eingerichtet ist, die Nachricht zu stoppen und eine Meldung
zu generieren und an den Mobile Node zu schicken,
wenn die Erfüllbarkeit mindestens der Mindest-Servicequalitätsanforderungen nicht gegeben ist.

7. Zwischeninstanz nach Anspruch 6,
wobei die Zwischeninstanz eingerichtet ist, dass wenn ein Handoff durchgeführt wird, eine Meldung, die eine Aussage darüber macht, welche Servicequalitätsanforderungen erfüllbar sind, in der Zwischeninstanz generiert und gleichzeitig oder
nach dem Durchführen des Handoffs an den Mobile Node gesendet wird.

8. Zwischeninstanz nach Anspruch 6 oder 7,
wobei es sich bei der Zwischeninstanz um ein Netzelement, insbesondere um einen Router, eine Basisstation, einen Controller oder
einen Mobility Anchor Point, MAP, handelt.

9. Zwischeninstanz nach einem der Ansprüche 6 bis 8,
wobei die Zwischen instanz eingerichtet ist, durch Kombination mit hierarchical Mobile IP
eine durch einen Mobile Node generierte Nachricht (BU) die mindestens eine dem Mobile Node aufgrund des gewählten Kommunikationspfad zugeordnete IP-Adresse und Mindest-Servicequalitätsanforderungen bezüglich des gewählten Kommunikationspfades enthält,
schnellstmöglich zu stoppen, eine Meldung zu generieren und an den Mobile Node zu schicken, wenn die Erfüllbarkeit mindestens der Mindest-Servicequalitätsanforderungen nicht gegeben ist oder den Handoff durchzuführen, wenn mindestens die Mindest-Servicequalitätsanforderungen erfüllt sind.

## Claims

1. Method for carrying out a QoS-oriented handoff between a first and a second IP-based, especially mobile IPv6-based communication path between a mobile node (1) and a correspondent mode (3), the second communication path belonging to a number of communication paths accessible to the mobile node, with one or a number of intermediate entities (2, 5, 6), and the method exhibiting at least the following steps:
a. selecting a communication path from the number of communication paths accessible to the mobile node as second communication path,
b. generating a message (BU), by the mobile node, which contains at least one IP address allocated to the mobile node on the basis of the selected communication path, and minimum quality-of-service requirements with respect to the selected communication path,
c. checking and possibly securing the capability of meeting at least the minimum quality-of-service requirements by the individual intermediate entities successively to be passed by the message on the selected communication path and/or by the correspondent node,
wherein the message contains minimum quality-of-service requirements on a communication from mobile node to correspondent node and/or conversely, and
wherein a handoff is automatically carried out between the first communication path and the communication path selected as the second one if at least the minimum quality-of-service requirements are met or
wherein the message is stopped and a message is generated in an intermediate entity and/or in the correspondent node and sent to the mobile node if the capability of meeting at least the minimum quality-of-service requirements is not given.

2. Method according to Claim 1, wherein the message generated in step b. contains a range of quality-of-service requirements which extends from the minimum quality-of-service requirements up to the desired quality-of-service requirements.

3. Method according to Claim 1 or 2, wherein when a handoff is carried out, a message which provides information about what quality-of-service requirements can be met is generated in an intermediate entity and/or the correspondent node and is sent to the mobile node at the same time or after the handoff has been carried out.

4. Method according to one of the preceding claims, wherein the intermediate entities are network elements, especially routers, base stations, controllers or mobility anchor points, MAP.

5. Method according to one of the preceding claims, wherein by combination with hierarchical mobile IP, a nearest suitable intermediate entity stops the message generated in step b. as quickly as possible, generates a message and sends it to the mobile node if the capability of meeting at least the minimum quality-of-service requirements is not given or carries out the handoff if at least the minimum quality-of-service requirements are met.

6. Intermediate entity, particularly a network element, on an IP-based, especially an IPv6-based, communication path between a mobile node (1) and a correspondent node (3),
wherein the intermediate entity (2, 5, 6) is set up to carry out at least the following steps:
a. receiving a message (BU), generated by the mobile node, which contains at least one IP address allocated to the mobile node on the basis of a selected communication path, and minimum quality-of-service requirements with respect to the selected communication path,
b. checking and possibly securing the capability of meeting at least the minimum quality-of-service requirements by the intermediate entity to be passed by the message on the selected communication path,
wherein the message contains minimum quality-of-service requirements on a communication from mobile node to correspondent node and/or conversely,
wherein the intermediate entity is set up to automatically carry out a handoff between the first communication path and the communication path selected as the second one if at least the minimum quality-of-service requirements are met, or
wherein the intermediate entity is set up to stop the message and to generate a message and send it to the mobile node if the capability of meeting at least the minimum quality-of-service requirements is not given.

7. Intermediate entity according to Claim 6, wherein the intermediate entity is set up such that when a handoff is carried out, a message which provides information about what quality-of-service requirements can be met is generated in the intermediate entity and is sent to the mobile node at the same time or after the handoff has been carried out.

8. Intermediate entity according to Claim 6 or 7, wherein the intermediate entity is a network element, especially a router, a base station, a controller or a mobility anchor point, MAP.

9. Intermediate entity according to one of Claims 6 to 8, wherein the intermediate entity is set up so as by combination with hierarchical mobile IP to stop a message (BU) generated by a mobile node, which message contains at least one IP address allocated to the mobile node on the basis of the selected communication path, and minimum quality-of-service requirements with respect to the selected communication path, as quickly as possible, to generate a message and sent it to the mobile node if the capability of meeting at least the minimum quality-of-service requirements is not given or to carry out the handoff if at least the minimum quality-of-service requirements are met.

## Revendications

1. Procédé de réalisation d'un transfert orienté QoS entre un premier et un second chemins de transmission basés IP, notamment basés IPv6 mobile, entre un noeud mobile (1) et un noeud de correspondant (3), le second chemin de transmission appartenant à un nombre de chemins de transmission, accessibles au noeud mobile, comprenant une ou plusieurs instances intermédiaires (2, 5, 6), et le procédé présentant au moins les étapes suivantes :
a. sélection d'un chemin de transmission à partir du nombre de chemins de transmission accessibles au noeud mobile, en tant que second chemin de transmission,
b. génération d'un message (BU) par le noeud mobile, qui contient au moins une adresse IP affectée au noeud mobile en raison du chemin de transmission sélectionné et des exigences de qualité de service minimales relatives au chemin de transmission sélectionné,
c. contrôle et, le cas échéant, sauvegarde de l'exécutabilité d'au moins les exigences de qualité de service minimales par chacune des instances intermédiaires à être traversées successivement par le message sur le chemin de transmission sélectionné et/ou par le noeud de correspondant,
le message contenant des exigences de qualité de service minimales envers une transmission du noeud mobile vers le noeud de correspondant et/ou vice versa, et
un transfert étant réalisé automatiquement entre le premier chemin de transmission et le chemin de transmission sélectionné comme second chemin de transmission, lorsqu'au moins les exigences de qualité de service minimales sont remplies ou
le message étant stoppé et un message étant généré dans une instance intermédiaire et/ou dans le noeud de correspondant et étant envoyé au noeud mobile lorsque l'exécutabilité d'au moins les exigences de qualité de service minimales n'est pas donnée.

2. Procédé selon la revendication 1,
le message généré à l'étape b. contenant une gamme d'exigences de qualité de service, qui s'étend des exigences de qualité de service minimales jusqu'aux exigences de qualité de service souhaitées.

3. Procédé selon la revendication 1 ou 2,
un message, qui indique quelles exigences de qualité de service sont exécutables, étant généré dans une instance intermédiaire et/ou dans le noeud de correspondant lorsqu'un transfert est réalisé, et étant émis au noeud mobile, simultanément ou après la réalisation du transfert.

4. Procédé selon l'une quelconque des revendications précédentes,
les instances intermédiaires étant des éléments de réseau, notamment des routeurs, des stations de base, des contrôleurs ou des Mobility Anchor Points MAP.

5. Procédé selon l'une quelconque des revendications précédentes,
une instance intermédiaire proche appropriée stoppant le plus rapidement possible le message généré à l'étape b. par combinaison avec des IP mobiles hiérarchiques, générant un message et l'envoyant au noeud mobile lorsque l'exécutabilité d'au moins les exigences de qualité de service minimale n'est pas donnée, ou réalisant le transfert lorsqu'au moins les exigences de qualité de transfert sont remplies.

6. Instance intermédiaire, notamment un élément de réseau, sur un chemin de transmission basé IP, notamment basé IPv6, entre un noeud mobile (1) et un noeud de correspondant (3),
l'instance intermédiaire (2, 5, 6) étant configurée pour exécuter au moins les étapes suivantes :
a. réception d'un message (BU) généré par le noeud mobile, qui contient au moins une adresse IP affectée au noeud mobile en raison d'un chemin de transmission sélectionné et des exigences de qualité de service minimales relatives au chemin de transmission sélectionné,
b. contrôle et, le cas échéant, sauvegarde de l'exécutabilité d'au moins les exigences de qualité de service minimales par les instances intermédiaires à être traversées par le message sur le chemin de transmission sélectionné,
le message contenant des exigences de qualité de service minimales envers une transmission du noeud mobile vers le noeud de correspondant et/ou vice versa,
l'instance intermédiaire étant configurée pour exécuter automatiquement un transfert entre le premier chemin de transmission et le chemin de transmission sélectionné comme second chemin de transmission, lorsqu'au moins les exigences de qualité de service minimales sont remplies, ou
l'instance intermédiaire étant configurée pour stopper le message et générer un message et l'envoyer au noeud mobile lorsque l'exécutabilité des exigences de qualité de service minimales n'est pas donnée.

7. Instance intermédiaire selon la revendication 6,
l'instance intermédiaire étant configurée de manière à ce que lorsqu'un transfert est réalisé, un message, qui indique quelles exigences de qualité de service sont exécutables, est généré dans l'instance intermédiaire et est émis au noeud mobile, simultanément ou après la réalisation du transfert.

8. Instance intermédiaire selon la revendication 6 ou 7,
l'instance intermédiaire étant un élément de réseau, notamment un routeur, une station de base, un contrôleur ou un Mobility Anchor Point MAP.

9. Instance intermédiaire selon l'une quelconque des revendications 6 à 8,
l'instance intermédiaire étant configurée pour stopper le plus rapidement possible, par combinaison avec des IP mobiles hiérarchiques, un message (BU) généré par un noeud mobile, qui contient au moins une adresse IP affectée au noeud mobile en raison du chemin de transmission sélectionné et des exigences de qualité de service minimales relatives au chemin de transmission sélectionné, pour générer un message et l'envoyer au noeud mobile lorsque l'exécutabilité d'au moins les exigences de qualité de service minimales n'est pas donnée, ou pour exécuter le transfert lorsqu'au moins les exigences de qualité de transfert sont remplies.
